# EUROPEAN PATENT APPLICATION

(11) **EP 2 667 024 A1**
(43) Date of publication of application: **27.11.2013**
(21) Application number: 12305577.4
(22) Date of filing: 24.05.2012
(51) Int. Cl.: F03D 9/00, F03D 11/00

(54) **Wind-solar-electricity generator with a horizontal levitation**

(71) Applicant: Alcatel Lucent, 75007 Paris (FR)
(72) Inventor: Klumpp, Dieter, 70193 Stuttgart (DE); Unfried, Jürgen, 70469 Stuttgart (DE)
(74) Representative: Meyer zu Bexten, Elmar

(57) **Abstract**

Electric generator (100) characterized in a vertical-axis wind turbine comprising a stator (102) and a rotor (101), wherein the rotor (101) is suspended from the stator (102).

## Description

### Field of the Invention

The invention relates to an electric generator.

### Background

This section introduces aspects that may be helpful in facilitating a better understanding of the disclosure. Accordingly, the statements of this section are to be read in this light and are not to be understood as admissions about what is not in the prior art.

In electricity generation, an electric generator is a device that converts mechanical energy to electrical energy. A generator forces electric charge (usually carried by electrons) to flow through an external electrical circuit. It is analogous to a water pump, which causes water to flow (but does not create water). Known sources of mechanical energy include reciprocating or turbine steam engines, water falling through a turbine or waterwheel, internal combustion engines, wind turbines, hand cranks, or compressed air.

### Summary

In one embodiment, an approach to electricity generation is disclosed which may allow for improved practicability.

An electric generator according to an embodiment is characterized in a vertical-axis wind turbine comprising a stator and a rotor, wherein the rotor is suspended from the stator.

### Brief Description of the Figures

Some embodiments of apparatus and/or methods in accordance with embodiments of the present invention are now described, by way of example only, and with reference to the accompanying drawings, in which:
Figure 1 is an end elevation of an electric generator according to an embodiment of the present invention, looking in the direction of arrow X of Figure 2.
Figure 2 is a cross-section taken through plane AB of Figure 1.

### Description of the Embodiments

Throughout this application, a wind turbine is any device that converts kinetic energy from the wind-that is, the energy the wind possesses due to its motion-into mechanical energy, usually by converting the force of the wind into torque on a rotating shaft. Where this mechanical energy is used to produce electricity, the device is also known as a wind generator or wind charger. The stationary part of the turbine is commonly referred to as the stator, whereas the non-stationary part is referred to as the rotor.

In aerodynamics, a vertical-axis wind turbine (VAWT) is a wind turbine where the main rotor shaft is set vertically and the main components are located at the base of the turbine. Among the advantages of this arrangement are that generators and gearboxes can be placed close to the ground, which makes these components easier to service and repair, and that VAWTs may not need to be pointed into the wind. United States patent 1,835,018 discloses an example of a conventional VAWT.

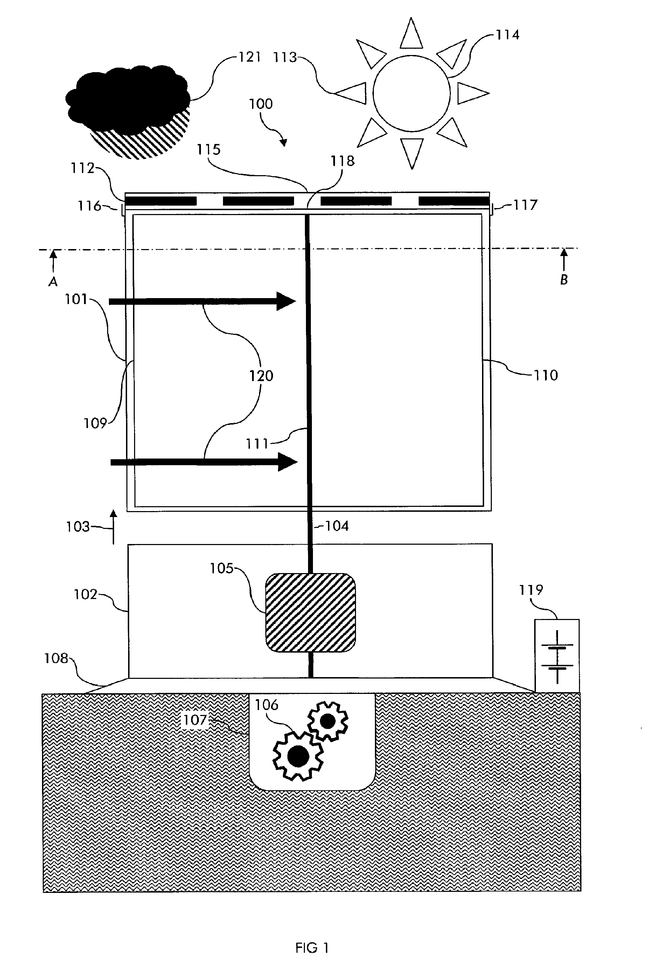

According to the embodiment of Figure 1, the rotor 101 of the wind turbine hovers above the stator 102 by means of levitation, that is, the process by which an object is suspended by a physical force in a stable position without solid physical contact. Levitation thus serves to counteract the effects of the gravitational and any other accelerations on the rotor and effectively avoids the resulting friction between the stationary and non-stationary parts of the generator 100. While any of the scientific techniques of levitation can be conceivably employed to this end, magnetic or electromagnetic levitation, also known as maglev or magnetic suspension, bears the particular advantage that it requires no support other than magnetic fields. Herein, magnetic field refers to any field produced by moving electric charges, by electric fields that vary in time, or by the intrinsic magnetic field of an elementary particle associated with the spin of the particle. German patent 422004 discloses an example of a conventional electromagnetic levitation apparatus.

In the embodiment at hand, the lifting force 103 on the rotor 101 may be provided by magnetic levitation while an additional mechanical support 104 bearing little load provides stability. This technique is known in the art as pseudo-levitation.

In an alternative embodiment, stable magnetic levitation can be achieved by measuring the position and speed of the rotor 101 and using a feedback loop which continually adjusts one or more electromagnets to correct the rotor's motion. To this end, the generator 100 may comprise a servomechanism, or servo, that is, an automatic device that uses error-sensing negative feedback to correct the performance of the levitation mechanism. In such system, negative feedback would occur when its output acts to oppose changes to its input, with the result that the changes are attenuated. If the overall feedback of the system is negative, then the turbine arrangement will tend to be stable.

As an alternative to using levitation, a ball transfer unit may be employed to suspend the rotor 101 from the stator 102. In this context, ball transfer unit refers to any arrangement of omni-directional load-bearing spherical balls mounted inside a restraining fixture, first disclosed in Italian patent 600670. To avoid disrupting the activity or balance of human or animal life, mitigation may be required to reduce noise pollution, such as by means of soundproofing or sound masking.

For optimum efficiency of the generator 100, the stator 102 comprises the armature winding 105 of the generator 100, that is, its power-producing component. In this configuration, permanent magnets or electromagnets formed by a conductive coil (not depicted) would be mounted on the rotor 101 to provide a magnetic field, sometimes referred to as magnetic flux, for the armature 105 to interact with. Additional components of the generator 100, such as a gearbox 106, may be collocated in a subsurface cavity structure 107 arranged beneath the base 108 of the turbine.

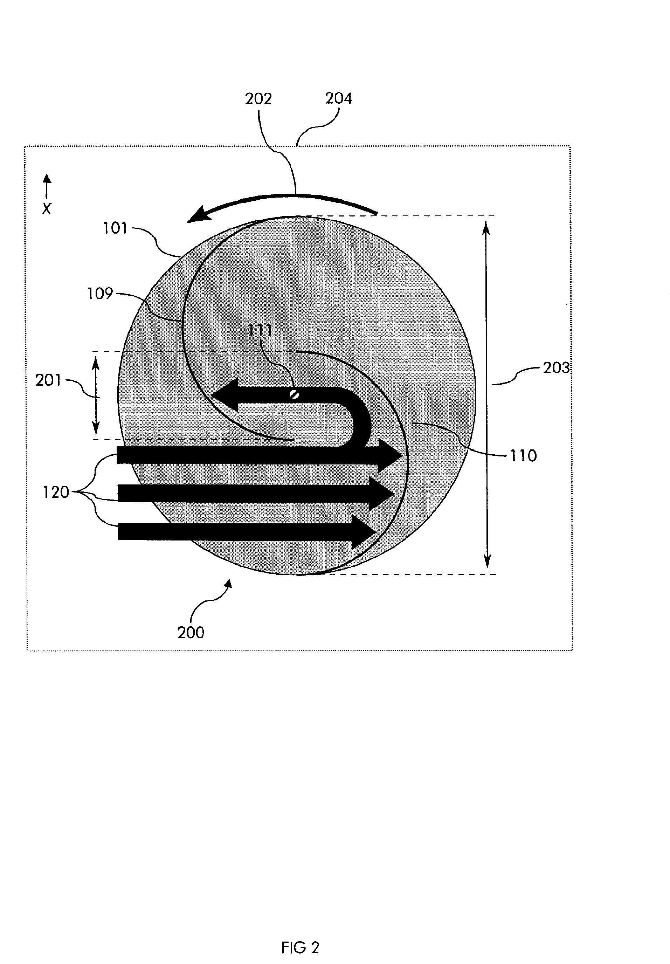

For reasons of reliability and cost-effectiveness, the wind turbine may take the form of a Savonius wind turbine, comprising a plurality of airfoils 109, 110 usually-but not necessarily-vertically mounted on a rotating shaft 111 or framework, either ground-stationed or tethered in an airborne system. Such an arrangement is depicted in Figure 2. Herein, wind 118 enters the turbine 200 and forces the airfoils 109, 110 into a rotational movement around the shaft 111. The differential drag experienced by the airfoils 109, 110, imposed by their specific curvature and offset 201, effectively causes the rotor 101 to spin in counter-clockwise direction 202. To improve overall energy extraction, a typical rotor 101 of this preferred embodiment may measure between 50 and 100 meters in diameter 203.

To leverage the photovoltaic effect, that is, the creation of voltage or a corresponding electric current in a surface of the generator upon its exposure to light, the generator 100 may additionally comprise a photovoltaic cell 112. In energy harvesting and conversion, a photovoltaic cell, also known as a photoelectric cell, is a solid-state electrical device that converts the energy of light into electricity. More specifically, the cell 112 may be configured to respond to sunlight 113, that is, a subset of the frequency spectrum of electromagnetic radiation given off by the Sun 114. In this case, the cell 112 is commonly referred to as a solar cell.

For tight arrangement, the solar cell 112 may be part of a packaged, interconnected assembly 115 of solar cells known as a photovoltaic panel, solar panel, or photovoltaic module. In this case, the generator 100 takes the form of a photovoltaic system (PV system), that is, a system that uses one or more photovoltaic panels 115 to convert sunlight 113 into electricity, and may comprise additional components such as mechanical and electrical connections and mountings and means of regulating or modifying the electrical output. To this end, the generator 100 may be planked with the photovoltaic panel 115, which may be attached to either the base 108 of the turbine or to its rotor 101.

More specifically, the panel 115 may form part of a roof-mounted solar power system comprising a plurality of solar panels held in place by racks or frames which are attached to roof-based mounting supports 116, 117 of the generator 100. Herein, roof refers to any covering 118 on the uppermost part of the rotor 101. Roofing the generator 100 bears the additional advantage of protecting its components from the effects of weather such as rain 121.

In an embodiment based on electromagnetic levitation, any electricity produced by the photovoltaic cell 112 or panel 115 may be fed back into the generator's electromagnets to satisfy their power requirements. An advanced embodiment may further comprise a rechargeable battery 119, also known as a storage battery, that is, a group of one or more secondary electrochemical cells. Herein, a secondary electrochemical cell is any device capable of deriving electrical energy from chemical reactions and facilitating chemical reactions through the introduction of electrical energy to recharge. While a generic device to supply the appropriate electric current is known as a charger or recharger, the wind turbine, when configured for this purpose, would commonly be labeled a wind generator or wind charger. In this scenario, the wind charger 100 would be electrically coupled to the battery 119 for refreshing the latter. By means of such arrangement, the battery 119 effectively serves as a buffer battery for bridging phases of still air or diffused light 113. For the case of an electrical power outage, the generator 100 may take the form of a fail-safe device, that is, a device that, in the event of failure, responds in a way that will cause a minimum of harm to other devices or danger to personnel.

To prevent unauthorized access to the generator 100, the latter preferably comprises a perimeter fence 204, that is, any structure that circles or surrounds its boundary. Typically, such fence 204 would be made out of single vertical metal bars connected at the top and bottom with a horizontal bar. Optionally, it may possess spikes on the top to prevent climbing. To avoid deflection of the wind 120, an improved fence 204 may comprise string-like pieces of metal stretching across horizontally and vertically, creating a mesh of metal.

The description merely illustrates the principles of the disclosure. It will thus be appreciated that those skilled in the art will be able to devise various arrangements that, although not explicitly described or shown herein, embody the principles of the disclosure and are included within its spirit and scope. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and embodiments of the disclosure, as well as specific examples thereof, are intended to encompass equivalents thereof.

## Claims

1. Electric generator (100) **characterized in** a vertical-axis wind turbine (200) comprising a stator (102) and a rotor (101), wherein the rotor (101) is suspended from the stator (102).

2. Generator as in claim 1 wherein the rotor (101) is suspended by means of at least one of the following: magnetic levitation, electromagnetic levitation, electrostatic levitation, aerodynamic levitation, acoustic levitation, gas film levitation, and optical levitation.

3. Generator as in claim 1 or 2 wherein the wind turbine (200) takes the form of a Savonius wind turbine (200).

4. Generator as in any of the preceding claims comprising a photovoltaic cell (112).

5. Generator as in claim 4 planked with a photovoltaic panel (115) comprising the photovoltaic cell (112).

6. Generator as in claim 5 wherein the photovoltaic panel (115) is attached to either of the following: the stator (102) and the rotor (101).

7. Generator as in claim 5 or 6 wherein the generator (100) is roofed with the photovoltaic panel (115).

8. Generator as in any of the preceding claims wherein the stator (102) is mounted at ground level.

9. Generator as in any of the preceding claims wherein the rotor (101) measures between 50 and 100 meters in diameter (203).

10. Generator as in any of the preceding claims comprising a rechargeable battery (119), wherein the wind turbine (200) takes the form of a wind charger and is electrically coupled to the battery (119) for refreshing the battery (119).

11. Generator as in any of the preceding claims comprising a perimeter fence (204).

12. Offshore platform comprising a generator as in any of the preceding claims.

13. Platform as in claim 12 moored to the seabed.

14. Platform as in claim 12 taking the form of a floating vessel.

15. Onshore platform comprising a generator as in any of claims 1 to 11.
